# EUROPÄISCHE PATENTSCHRIFT

(11) **EP 3 374 167 B1**
(45) Veröffentlichungstag und Bekanntmachung des Hinweises auf die Patenterteilung: **15.04.2020**
(21) Anmeldenummer: 16781769.1
(22) Anmeldetag: 13.10.2016
(51) Int. Cl.: B29C 70/44, B29C 70/08, B29C 70/72, B29C 70/84, F16C 7/02, B60G 7/00, B29C 65/00, F16C 3/02

(54) **VERFAHREN ZUR HERSTELLUNG EINES FASERVERBUND-FAHRZEUGBAUTEILS**
METHOD FOR MANUFACTURING A FIBRE-REINFORCED VEHICLE COMPONENT
PROCÉDÉ DE FABRICATION POUR PIECE DE VEHICULE EN MATIÈRE COMPOSITE

(30) Priorität: 12.11.2015 DE 102015222297
(43) Veröffentlichungstag der Anmeldung: 19.09.2018
(73) Patentinhaber: ZF Friedrichshafen AG, 88046 Friedrichshafen (DE)
(72) Erfinder: LOBO CASANOVA, Ignacio, 88677 Markdorf (DE); SCHRAMM, Mathias, 96049 Bamberg (DE)
(74) Vertreter: ZF Friedrichshafen AG
(86) Internationale Anmeldenummer: PCT/EP2016/074531
(87) Internationale Veröffentlichungsnummer: WO 2017/080746

(56) Entgegenhaltungen:
- EP-A1- 1 818 252
- WO-A1-2016/015933
- DE-A1-102012 020 628
- US-A1- 2013 055 850
- US-B1- 6 324 940

## Beschreibung

Die Erfindung betrifft ein Verfahren zur Herstellung eines Fahrzeugbauteils in der Ausbildung eines Fahrwerkbauteils für ein Kraftfahrzeug gemäss Anspruch 1.

Aus der DE 10 2012 020 628 A1 ist eine Koppelstange zum gelenkigen Anbinden von Fahrwerksteilen eines Fahrwerks mit einem eine Lagerbuchse aufweisenden Lagerauge bekannt. Hierbei kann die Koppelstange als Spritzgussteil hergestellt werden. Die Lagerbuchse kann mittels eines Einspritz-Prozesses in das Lagerauge realisiert werden.

Der US 2013/0055850 A1 ist eine Verbindung zu entnehmen, bei der ein Ende eines Strebenelementes in eine U-förmige Aufnahme aufgenommen ist. Eine Fixierung zur Realisierung einer festen Verbindung erfolgt mittels zusätzlicher Sicherungsstifte. Das Dokument US 6,324,940 B1 betrifft eine Verbindungsstange für ein Fahrwerk eines Fahrzeuges, wobei zwei voneinander abgewandte Enden eines Strebenelementes jeweils in einer Öffnung eines Endstückes aufgenommen sind. Zum Herstellen einer festen Verbindung wird ein zusätzlicher Faserkunststoffverbund um das Strebenelement und die Endstücke hergestellt.

Die EP 1 818 252 A1 zeigt einen Tretkurbelarm für ein Fahrrad.

Ein aus einem Faser-Kunststoff-Verbund (FKV) mit duroplastischer Matrix gebildeter 3-Punkt Lenker wird als Multimateriallösung gefertigt und umfasst z.B. eine Lagerbuchse aus Aluminium sowie ein Laminat aus kohlenstofffaserverstärktem Kunststoff (CFK). Da ein direkter Kontakt der Aluminiumbuchse mit den Kohlenstofffasern zu einer Korrosion führen kann, ist für die Anbindung der Aluminiumbuchse an das Laminat nur mittels eines Haftvermittlers oder einer Grenz- oder Zwischenschicht möglich, die z.B. ein Glasfaser-Textil umfasst. Der Korrosionsschutz führt somit zu zusätzlichen Arbeitsschritten und Kosten. Insbesondere bei einem 3-Punktlenker mit zwei Lagerbuchsen ist eine aufwändige Abdichtung und Positionierung der Lagerbuchsen im formgebenden Werkzeug erforderlich (z.B. mehrteilige Welle als Kern für die Lagerbuchsen + O-Ringe).

Ferner ist die Integration von Gummilagern mittels Kunststoff-Spritzguss in Bauteile aus einem Faser-Kunststoff-Verbund bekannt. Beispielsweise offenbart die DE 10 2011 003 971 A1 ein Lenkerelement mit zumindest zwei Endbereichen mit jeweils einem Lagerungsabschnitt sowie zumindest einem die Endbereiche verbindenden Strebenbereich, wobei die Endbereiche und der Strebenbereich durch einen aus einem plattenförmigen Kunststoffhalbzeug mit Endlosfaserverstärkung im Wesentlichen kastenförmig tiefgezogenen Profilträger gebildet sind, in dessen Innenraum ein Füllkörper aus einem spritzgegossenen Kunststoff angeordnet ist. Insbesondere umfasst zumindest ein Lagerungsabschnitt des Lenkerelements eine schwenkbewegliche Lageranordnung, wobei der Füllkörper die Lageranordnung mit dem Profilträger durch Hinterspritzung verbindet. Die Lageranordnung umfasst dabei einen Elastomerkörper, der durch den Füllkörper umspritzt ist. Der Profilträger und der Füllkörper bestehen aus einem thermoplastischen Kunststoff.

Mit Bauteilen aus Multimaterialien (z.B. aus Aluminium + CFK-Laminat) sind insbesondere folgende Probleme verbunden:
- Eine Korrosionsbeständigkeit ist bislang nur mittels Haftvermittler bzw. mittels einer Grenzschicht (Glasfaser-Textil) möglich, sodass zusätzliche Arbeitsschritte und Kosten auftreten;
- Inhomogene Materialeigenschaften führen zu Steifigkeits- und Festigkeitssprüngen durch unterschiedliche E-Module und/oder Zug-/Druckfestigkeiten der Materialien (Aluminium + CFK);
- Unterschiedliche Ausdehnungskoeffizienten führen dazu, dass eine Klimawechselbeständigkeit nicht gewährleistet ist;
- Eine Haftung ist nur formschlüssig und nicht chemisch möglich.

Ferner ist der Vorformling (trockenes Faserhalbzeug) des Faser-Kunststoff-Verbunds komplex und das Handling des Spritzpresswerkzeugs aufwändig (z.B. mehrteilige Welle als Kern für die Lagerbuchsen mit Abdichtung). Auch ist eine unabhängige Ausrichtung der Lagerachsen der Lagerbuchsen nur beschränkt möglich.

Zusätzlich weisen Fahrzeugbauteile aus thermoplastischem Kunststoff das Problem auf, dass sie mit zunehmendem Alter, beispielsweise durch Wasseraufnahme, Festigkeit verlieren. Auch können Fahrzeugbauteile aus thermoplastischem Kunststoff nicht in Bereichen erhöhter Temperatur, wie z.B. in der Nähe von Fahrzeugbremsen, eingesetzt werden, da der thermoplastische Kunststoff durch die Wärme aufweichen und somit seine Festigkeit verlieren könnte.

Ausgehend hiervon liegt der Erfindung die Aufgabe zugrunde, einen oder mehrere der vorgenannten Nachteile vermeiden zu können.

Diese Aufgabe wird durch ein Verfahren nach Anspruch 1 gelöst. Bevorzugte Weiterbildungen der Erfindung sind in den Unteransprüchen und in der nachfolgenden Beschreibung gegeben.

Das Verfahren zur Herstellung eines Fahrzeugbauteils in der Ausbildung eines Fahrwerkbauteils für ein Kraftfahrzeug umfasst unter anderem die Verfahrensschritte: Einbringen eines Fäser-Matrix-Halbzeugs mit duroplastischer Matrix in eine Pressform, Herstellen einer Lagerbuchse durch Pressen des Faser-Matrix-Halbzeugs, Herstellen eines Faservorformlings für eine Verbindungsstrebe, Einbringen des Faservorformlings in eine Spritzpressform, Herstellen der Verbindungsstrebe durch Imprägnieren des Faservorformlings mit einem duroplastischen Material, welches dazu in die Spritzpressform, insbesondere durch Spritzpressen, eingespritzt und/oder eingebracht wird, und festes Verbinden der Verbindungsstrebe mit der Lagerbuchse.

Durch das vorgenannte Verfahren werden die Lagerbuchse und die Verbindungsstrebe aus einem duroplastischen Material hergestellt, sodass eine hohe Langzeitstabilität und Temperaturbeständigkeit des Fahrzeugbauteils erzielbar sind. Dabei werden die Verbindungsstrebe und die Lagerbuchse auf unterschiedliche Weise hergestellt. Die Verbindungsstrebe, die insbesondere eine relativ einfache Geometrie ohne Hohlräume aufweist, wird im Spritzpressverfahren hergestellt. Die Lagerbuchse, die insbesondere eine kompliziertere Geometrie mit einem Hohlraum aufweist, wird durch Pressen eines Faser-Matrix-Halbzeugs hergestellt. Das Verfahren kombiniert somit zwei unterschiedliche Herstellungsmethoden, die auf die jeweils herzustellende Teilkomponente angepasst sind. Ferner ist zur Herstellung der Lagerbuchse insbesondere keine Welle mit Abdichtung erforderlich. Auch können beispielsweise bei einem Dreipunktlenker mit zwei Lagerbuchsen unterschiedliche Ausrichtungen der Lagerachsen der Lagerbuchsen realisiert werden. Die Lagerbuchse kann z.B. auch als Lagerhülse bezeichnet werden.

Das Herstellen der Verbindungsstrebe erfolgt bevorzugt durch Spritzpressen. Insbesondere erfolgt das Herstellen der Verbindungsstrebe in einem Spritzpresswerkzeug. Vorzugsweise ist oder wird die Spritzpressform in dem oder einem Spritzpresswerkzeug vorgesehen.

Unter Spritzpressen wird insbesondere bevorzugt ein Verfahren zur Herstellung von Formteilen verstanden, wobei ein Faservorformling, der insbesondere ein trockener Faservorformling ist, mit einem aushärtbaren Kunststoff imprägniert wird. Das Imprägnieren erfolgt z.B. durch Einspritzen des noch flüssigen Kunststoffs unter Druck in eine geschlossene und den Faservorformling aufnehmende Form, insbesondere unter Zufuhr von Wärme. Nach dem Aushärten bildet das so hergestellte Formteil ein faserverstärktes Kunststoffbauteil, welches hier die Verbindungsstrebe ist. Als Kunststoff wird insbesondere ein Duroplast, wie z.B. ein Epoxidharz, verwendet. Der Faservorformling besteht bevorzugt aus Kohlenstofffasern und/oder Glasfasern. Ferner kann der Faservorformling ein Bindemittel zur Förmstabilisierung umfassen. Der Faservorformling wird vorzugsweise endformnah hergestellt, was heißt, dass die Form des Faservorformlings bevorzugt der Form der Verbindungsstrebe nahekommt. Das Spritzpressen wird insbesondere auch als Harzinjektionsverfahren oder Resin Transfer Molding (RTM) bezeichnet. Entsprechend wird das Spritzpresswerkzeug bevorzugt auch als RTM-Werkzeug bezeichnet. Ferner wird der Faservorformling beispielsweise auch als RTM-Preform bezeichnet.

Das Herstellen der Lagerbuchse erfolgt bevorzugt in einem Presswerkzeug. Insbesondere ist die Pressform in dem oder einem Presswerkzeug vorgesehen. Bei dem Pressen des Faser-Matrix-Halbzeugs handelt es sich bevorzugt Fließpressen und/oder Heißpressen. Das Presswerkzeug und das Spritzpresswerkzeug sind z.B. separat voneinander vorgesehen. Alternativ ist die Pressform und/oder das Presswerkzeug z.B. in das Spritzpresswerkzeug integriert.

Als Faser-Matrix-Halbzeug wird insbesondere ein Halbzeug aus Verstärkungsfasern verstanden, die mit einer Kunststoffmatrix getränkt sind. Bevorzugt wird als Faser-Matrix-Halbzeug ein Sheet-Molding-Compound (SMC) oder ein Bulk-Molding-Compound (BMC) verwendet. SMC liegt z.B. in Form von Matten oder Platten vor, wohingegen BMC z.B. als formlose Masse zur Verfügung gestellt wird. Die Verstärkungsfasern im BMC sind in der Regel kürzer als im SMC. Als Fasern oder Verstärkungsfasern werden insbesondere Kohlenstofffasern verwendet. Als Kunststoffmatrix wird insbesondere ein Duroplast, wie z.B. ein Epoxidharz, verwendet. Die in die Pressform eingebrachten SMC-Matten oder -Platten werden insbesondere auch als SMC-Preform bezeichnet. Ferner wird die in die Pressform eingebrachte BMC-Masse insbesondere auch als BMC-Preform bezeichnet.

Die Lagerbuchse ist vorzugsweise starr und/oder formstabil. Insbesondere bildet die Lagerbuchse einen starren und/oder formstabilen Körper. Bevorzugt umfasst die Lagerbuchse einen zylindrischen Hohlraum. Vorzugsweise bildet oder umfasst die Lagerbuchse einen hohlzylindrischen oder im Wesentlichen hohlzylindrischen Lagerkörper.

Gemäß einer Weiterbildung wird in die Lagerbuchse und/oder in deren Hohlraum ein Elastomerlager eingebracht. Das Elastomerlager umfasst bevorzugt ein Innenteil und einen dieses umringenden und mit dem Innenteil verbundenen elastomeren Lagerkörper. Insbesondere wird der elastomere Lagerkörper zusammen mit dem Innenteil in die Lagerbuchse und/oder in deren Hohlraum eingebracht. Bevorzugt liegt der elastomere Lagerkörper an der Innenumfangsfläche der Lagerbuchse und/oder des Hohlraum der Lagerbuchse an.

Die Verbindungsstrebe ist vorzugsweise starr und/oder formstabil. Insbesondere bildet die Verbindungsstrebe einen starren und/oder formstabilen Körper. Zum festen Verbinden der Verbindungsstrebe mit der Lagerbuchse wird ein Endbereich der Verbindungsstrebe mit der Lagerbuchse formschlüssig, insbesondere stoffschlüssig und formschlüssig, verbunden. Die Verbindungsstrebe kann z.B. gerade, dreieckig, U-förmig oder L-förmig ausgebildet sein. Bei einer gerade ausgebildeten Verbindungsstrebe handelt es sich bei dem Fahrzeugbauteil bevorzugt um einen geraden 2-Punkt-Lenker. Bei einer dreieckig, U-förmig oder L-förmig ausgebildeten Verbindungsstrebe handelt es sich bei dem Fahrzeugbauteil bevorzugt um einen 3-PunktLenker. Vorzugsweise weist die Verbindungsstrebe ein, wenigstens ein oder zwei zusätzliche Endbereiche auf, an denen insbesondere ebenfalls eine, wenigstens eine oder mehrere zusätzliche Lagerbuchsen und/oder Gelenkaufnahmen vorgesehen werden.

Bevorzugt erfolgt das feste Verbinden der Verbindungsstrebe mit der Lagerbuchse durch Stoffschluss und Formschluss und/oder zum festen Verbinden der Verbindungsstrebe mit der Lagerbuchse wird die Verbindungsstrebe wird mit der Lagerbuchse vorzugsweise stoffschlüssig und formschlüssig verbunden. Insbesondere wird die Verbindungsstrebe mit der Lagerbuchse verklebt.

Gemäß einer Weiterbildung wird die Lagerbuchse, insbesondere einstückig und/oder materialhomogen, mit einem Anschlussbereich hergestellt, der vorzugsweise eine Verbindungsnut umfasst, wobei zum festen Verbinden der Verbindungsstrebe mit der Lagerbuchse der Endbereich der Verbindungstrebe formschlüssig, vorzugsweise form- und stoffschlüssig, an den Anschlussbereich angeschlossen und/oder in die Verbindungsnut eingebracht wird. Beispielsweise wird ein Klebstoff in die Verbindungsnut eingebracht. Somit kann z.B. die Verbindungsstrebe mit der Lagerbuchse verklebt und zusätzlich stoffschlüssig verbunden werden. Als Klebstoff wird z.B. ein Polyurethan oder ein Klebstoff auf Basis von Polyurethan verwendet,

Bevorzugt wird die Verbindungsnut mit einer Hinterschneidung und/oder Vertiefung versehen, in welche der oder ein Endbereich der Verbindungsstrebe und/oder des Faservorformlings und/oder ein an dem oder einem Endbereich der Verbindungsstrebe und/oder des Faservorformlings vorgesehener Vorsprung formschlüssig eingreift. Alternativ wird z.B. der oder ein Endbereich der Verbindungsstrebe und/oder des Faservorformlings mit einer Hinterschneidung und/oder Vertiefung versehen, in welche ein in der Verbindungsnut vorgesehener Vorsprung der Lagerbuchse formschlüssig eingreift. Insbesondere werden sowohl die Verbindungsnut als auch der oder ein Endbereich der Verbindungsstrebe und/oder des Faservorformlings zumindest bereichsweise trapezförmig ausgebildet, sodass die Verbindung zwischen der Lagerbuchse und der Verbindungsstrebe und/oder des Faservorformlings als Schwalbenschwanzverbindung ausgebildet wird. Somit ist eine formschlüssige Verbindung zwischen der Lagerbuchse und der Verbindungsstrebe und/oder des Faservorformlings realisierbar. Die Hinterschneidung der Verbindungsnut wird bevorzugt in Form einer, insbesondere trapezförmigen, Aufweitung der Verbindungsnut realisiert. Der in dem öder einem Endbereich der Verbindungsstrebe und/oder des Faservorformlings vorgesehene Vorsprung wird bevorzugt in Form einer, insbesondere trapezförmigen, Aufweitung des Endbereichs realisiert.

Gemäß einer Weiterbildung wird in den Anschlussbereich und/oder in wenigstens ein in dem Anschlussbereich eingebrachtes Loch bevorzugt wenigstens ein in den Endbereich der Verbindungsstrebe und/oder des Faservorformlings eingreifender Stift eingebracht, sodass die Lagerbuchse und die Verbindungsstrebe und/oder der Faservorformling durch den Stift, insbesondere zusätzlich, formschlüssig miteinander verbunden werden. Der Stift besteht z.B. aus Metall oder Kunststoff, wie z.B. kohlenstofffaserverstärktem Kunststoff. Besteht der Stift aus Metall, so ist dieser vorzugsweise beschichtet, um Kontaktkorrosion mit Kohlenstofffasern zu verhindern. Das Einbringen des Stifts erfolgt bevorzugt im Spritzpresswerkzeug.

Gemäß einer Weiterbildung wird die Lagerbuchse an ihrem Außenumfang zusätzlich mit Fasern umschlungen, die insbesondere fest mit der Verbindungstrebe und/oder dem Faservorformling verbunden werden. Das Verbinden der die Lagerbuchse umschlingenden Fasern mit der Verbindungstrebe erfolgt vorzugsweise stoffschlüssig. Durch die Faserumschlingung wird die Lagerbuchse, insbesondere zusätzlich, formschlüssig mit der Verbindungstrebe und/oder dem Faservorformling verbunden. Das Umschlingen der Lagerbuchse mit den Fasern erfolgt bevorzugt im Spritzpresswerkzeug. Vorteilhaft sind die die Lagerbuchse umschlingenden Fasern Teil des Faservorformlings.

Gemäß einer ersten Variante werden sowohl die Lagerbuchse als auch die Verbindungsstrebe separat voneinander hergestellt und anschließend miteinander verbunden. In diesem Fall ist die Pressform bevorzugt in dem oder einem Presswerkzeug vorgesehen, welches insbesondere separat von dem oder einem Spritzpresswerkzeug vorgesehen ist.

Gemäß einer zweiten Variante wird die hergestellte Lagerbuchse vor dem Imprägnieren des Faservorformlings in die Spritzpressform und/oder in das Spritzpresswerkzeug eingebracht. Anschließend wird die Verbindungsstrebe durch das Imprägnieren des Faservorformlings, formschlüssig, mit der Lagerbuchse verbunden. Dabei wird vor dem Imprägnieren des Faservorformlings bevorzugt der Faservorformling mit dem oder einem Endbereich in die Verbindungsnut eingebracht oder in dieser angeordnet. Auch in diesem Fall ist die Pressform bevorzugt in dem oder einem Presswerkzeug vorgesehen, welches insbesondere separat von dem oder einem Spritzpresswerkzeug vorgesehen ist.

Gemäß einer dritten Variante sind oder werden die Pressform und die Spritzpressform miteinander kombiniert und/oder in enger räumlicher Nähe zueinander vorgesehen und/oder in einem gemeinsamen Werkzeug vorgesehen, welches insbesondere das oder ein Spritzpresswerkzeug ist, wobei das Imprägnieren des Faservorformlings gleichzeitig mit oder nach dem Pressen des Faser-Matrix-Halbzeugs aber vor dem Aushärten oder vollständigen Aushärten der duroplastischen Matrix und/oder der Lagerbuchse erfolgt. Somit wird die Verbindungsstrebe durch das Pressen des Faser-Matrix-Halbzeugs und/oder durch das Imprägnieren des Faservorformlings zusätzlich stoffschlüssig mit der Lagerbuchse verbunden. Dabei wird vor dem Imprägnieren des Faservorformlings der Faservorformling bevorzugt mit dem oder einem Endbereich in die Verbindungsnut eingebracht oder in dieser angeordnet. Vorteilhaft wird vor dem Imprägnieren des Faservorformlings der Faservorformling mit dem oder einem Endbereich vor dem Pressen oder durch das Pressen des Faser-Matrix-Halbzeugs in die Verbindungsnut eingebracht oder in dieser angeordnet.

Erfindungsgemäss bildet das Fahrzeugbauteil ein Fahrwerkbauteil. Bevorzugt bildet oder ist das Fahrzeugbauteil ein Lenker für eine Rad- oder Achsaufhängung eines Fahrzeugs. Insbesondere ist der Lenker ein Zweipünktlenker oder ein Mehrpunktlenker, wie z.B. ein Dreipunkt- oder ein Vierpunktlenker. Vorteilhaft wird das Fahrzeugbauteil in eine Radaufhängung oder Achsaufhängung eines Fahrzeugs eingebaut. Beispielsweise wird das Innenteil des Elastomerlagers mit einem Fahrzeugaufbau oder einem Radträger verbunden. Bei dem Fahrzeug handelt es sich um ein Kraftfahrzeug.

Die Erfindung wird nachfolgend anhand bevorzugter Ausführungsformen unter Bezugnahme auf die Zeichnung beschrieben. In der Zeichnung zeigen:
- Fig. 1: ein Flussdiagramm zur Veranschaulichung eines Verfahrens zur Herstellung eines Fahrzeugbauteils gemäß einer ersten Ausführungsform,
- Fig. 2: eine perspektivische Ansicht einer nach dem Verfahren gemäß Fig. 1 hergestellten Lagerbuchse,
- Fig. 3: eine perspektivische Teilansicht einer nach dem Verfahren gemäß Fig. 1 hergestellten Verbindungsstrebe,
- Fig. 4: eine perspektivische Teilansicht eines nach dem Verfahren gemäß Fig. 1 hergestellten Fahrzeugbauteils,
- Fig. 5: ein Flussdiagramm zur Veranschaulichung eines Verfahrens zur Herstellung eines Fahrzeugbauteils gemäß einer zweiten Ausführungsform,
- Fig. 6: eine perspektivische Ansicht einer nach dem Verfahren gemäß Fig. 5 hergestellten Lagerbuchse,
- Fig. 7: eine perspektivische Teilansicht eines für das Verfahren gemäß Fig. 5 hergestellten und/oder verwendeten Faservorformlings,
- Fig. 8: eine perspektivische Teilansicht eines nach dem Verfahren gemäß Fig. 5 hergestellten Fahrzeugbauteils,
- Fig. 9: ein Flussdiagramm zur Veranschaulichung eines Verfahrens zur Herstellung eines Fahrzeugbauteils gemäß einer dritten Ausführungsform,
- Fig. 10: eine schematische Ansicht eines für das Verfahren gemäß Fig. 9 hergestellten und/oder verwendeten SMC-Preforms,
- Fig. 11: eine perspektivische Teilansicht eines für das Verfahren gemäß Fig. 9 hergestellten und/oder verwendeten Faservorformlings,
- Fig. 12: eine perspektivische Teilansicht eines nach dem Verfahren gemäß Fig. 9 hergestellten Fahrzeugbauteils,
- Fig. 13: eine perspektivische Teilansicht eines Fahrzeugbauteils gemäß einer ersten Weiterbildung, wobei in einen Anschlussbereich der Lagerbuchse in einen Endbereich der Verbindungsstrebe und/oder des Faservorformlings eingreifende Stifte eingebracht sind oder werden,
- Fig. 14: eine perspektivische Teilansicht eines Fahrzeugbauteils gemäß einer zweiten Weiterbildung, wobei die Lagerbuchse an ihrem Außenumfang zusätzlich mit Fasern umschlungen ist oder wird und
- Fig. 15: eine perspektivische Teilansicht eines Fahrzeugbauteils gemäß einer dritten Weiterbildung.

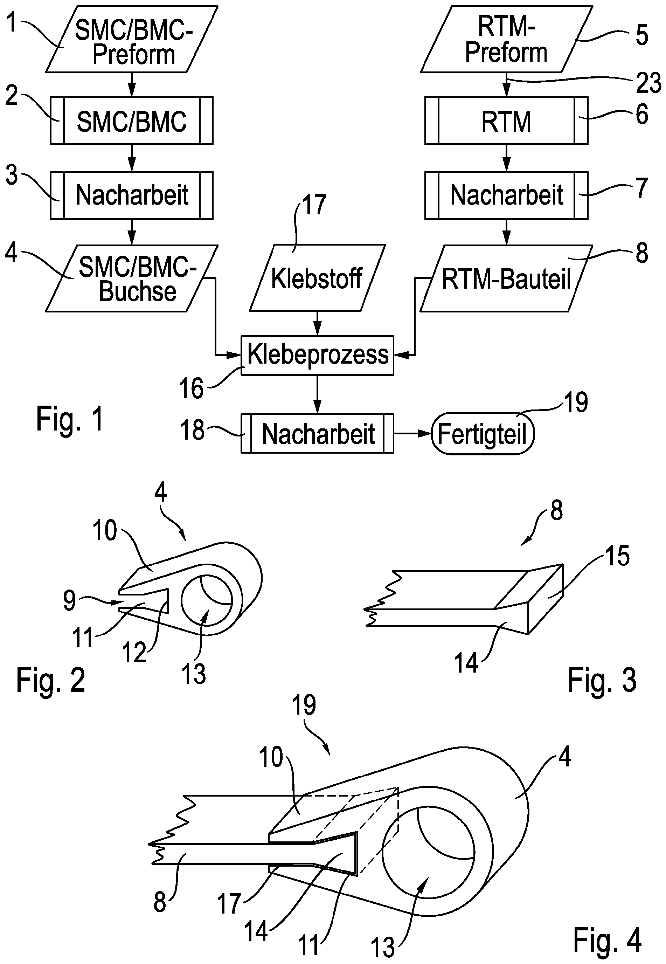

Aus Fig. 1 ist ein Flussdiagramm zur Veranschaulichung eines Verfahrens zur Herstellung eines Fahrzeugbauteils gemäß einer ersten Ausführungsform ersichtlich, wobei in einem ersten Schritt 1 (SMC/BMC-Preform) ein Faser-Matrix-Halbzeug mit duroplastischer Matrix in eine Pressform eines Presswerkzeugs eingebracht wird. Bei der duroplastischen Matrix handelt es sich um ein SMC-Halbzeug oder BMC-Halbzeug, sodass das in die Pressform eingebrachte Faser-Matrix-Halbzeug als SMC-Preform oder BMC-Preform bezeichnet wird. In einem nachfolgenden zweiten Schritt 2 (SMC/BMC) wird eine Lagerbuchse in Form eines Rohbauteils durch Pressen des Faser-Matrix-Halbzeugs hergestellt. Anschließend wird das ausgehärtete Lagerbuchsen-Rohbauteil in einem dritten Schritt 3 (Nacharbeit) dem Presswerkzeug entnommen und nachbearbeitet, beispielsweise besäumt. Die fertige Lagerbuchse 4 (SMC/BMC-Buchse) ist in Fig. 1 lediglich schematisch angedeutet und in perspektivischer Ansicht aus Fig. 2 ersichtlich.

In einem vierten Schritt 5 (RTM-Preform) wird ein Faservorformling, der auch als RTM-Preform bezeichnet wird, hergestellt. Danach wird der Faservorformling in einem fünften Schritt 23 in eine Spritzpressform eines Spritzpresswerkzeugs eingebracht. In einem nachfolgenden sechsten Schritt 6 (RTM) wird eine Verbindungsstrebe in Form eines Rohbauteils durch Imprägnieren des Faservorformlings mit einem duroplastischen Material hergestellt, welches dazu in die Spritzpressform durch Spritzpressen eingespritzt wird. Anschließend wird das ausgehärtete Verbindungsstreben-Rohbauteil in einem siebten Schritt 7 (Nacharbeit) dem Spritzpresswerkzeug entnommen und nachbearbeitet, beispielsweise besäumt. Die fertige Verbindungsstrebe 8 (RTM-Bauteil) ist in Fig. 1 lediglich schematisch angedeutet und in perspektivischer Teilansicht aus Fig. 3 ersichtlich.

Aus Fig. 2 ist ersichtlich, dass die Lagerbuchse 4 mit einem eine Verbindungsnut 9 umfassenden Anschlussbereich 10 hergestellt worden ist, wobei die Verbindungsnut 9 in einem Endbereich 11 in Richtung des Nutgrunds 12 trapezförmig aufgeweitet ist. Ferner ist die Lagerbuchse 4 mit einem Hohlraum in Form einer durchgehenden Öffnung 13 versehen. Aus Fig. 3 ist ersichtlich, dass auch die Verbindungsstrebe 8 in einem Endbereich 14 in Richtung ihres stirnseitigen Endes 15 trapezförmig aufgeweitet ist.

In einem nachfolgenden achten Schritt 16 (Klebeprozess) wird der Endbereich 14 der Verbindungsstrebe 8 unter Zugabe von Klebstoff 17 in die Verbindungsnut 9 eingebracht, und zwar derart, dass der trapezförmig aufgeweitete Endbereich 14 der Verbindungsstrebe 8 in den trapezförmig aufgeweiteten Endbereich 11 der Verbindungsnut 9 eingreift. Durch Aushärten des Klebstoffs 17 werden die Verbindungsstrebe 8 und die Lagerbuchse 4 dann stoffschlüssig miteinander verbunden. Ferner werden die Verbindungsstrebe 8 und die Lagerbuchse 4 durch die Ineinandergrei- . fenden Endbereiche 11 und 14 formschlüssig miteinander verbunden. Das durch das Verbinden der Verbindungsstrebe 8 mit der Lagerbuchse 4 hergestellte Rohbauteil wird in einem nachfolgenden neunten Schritt 18 (Nacharbeit) zu einem Fertigteil 19 nachbearbeitet, welches in perspektivischer Teilansicht aus Fig. 4 ersichtlich ist. Das Nachbearbeiten in Schritt 18 kann z.B. das Entfernen von überstehendem Klebstoff umfassen.

Aus Fig. 4 ist ersichtlich, dass bei dem Fertigteil 19 die Verbindungsstrebe 8 und die Lagerbuchse 4 durch die ineinandergreifenden trapezförmigen Aufweitungen 11 und 14 nach Art einer Schwalbenschwanzverbindung formschlüssig miteinander verbunden sind. Ferner ist ersichtlich, dass die Verbindungsstrebe 8 und die Lagerbuchse 4 durch den Klebstoff 17 stoffschlüssig miteinander verbunden sind.

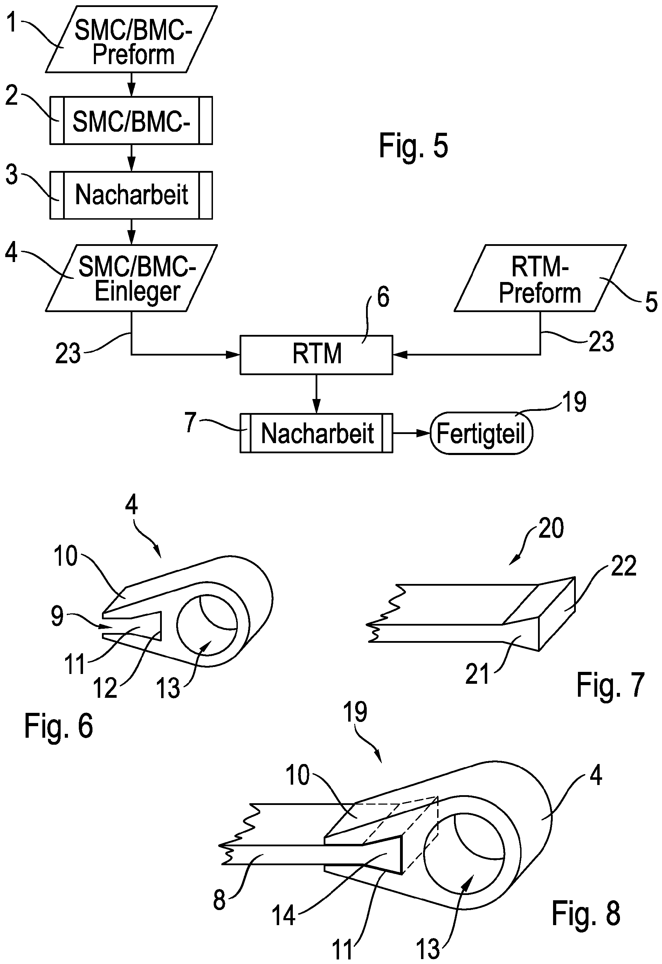

Aus Fig. 5 ist ein Flussdiagramm zur Veranschaulichung eines Verfahrens zur Herstellung eines Fahrzeugbauteils gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind.

In einem ersten Schritt 1 (SMC/BMC-Preform) wird ein Faser-Matrix-Halbzeug mit duroplastischer Matrix in eine Pressform eines Presswerkzeugs eingebracht. Bei der duroplastischen Matrix handelt es sich um ein SMC-Halbzeug oder BMC-Halbzeug, sodass das in die Pressform eingebrachte Faser-Matrix-Halbzeug als SMC-Preform oder BMC-Preform bezeichnet wird. In einem nachfolgenden zweiten Schritt 2 (SMC/BMC) wird eine Lagerbuchse in Form eines Rohbauteils durch Pressen des Faser-Matrix-Halbzeugs hergestellt. Anschließend wird das ausgehärtete Lagerbuchsen-Rohbauteil in einem dritten Schritt 3 (Nacharbeit) dem Presswerkzeug entnommen und nachbearbeitet, beispielsweise besäumt. Die fertige Lagerbuchse 4 (SMC/BMC-Einleger) ist in Fig. 1 lediglich schematisch angedeutet und in perspektivischer Ansicht in Fig. 6 gezeigt.

Aus Fig. 6 ist ersichtlich, dass die Lagerbuchse 4 mit einem eine Verbindungsnut 9 umfassenden Anschlussbereich 10 hergestellt worden ist, wobei die Verbindungsnut 9 in einem Endbereich 11 in Richtung des Nutgrunds 12 trapezförmig aufgeweitet ist.

Ferner ist die Lagerbuchse 4 mit einem Hohlraum in Form einer durchgehenden Öffnung 13 versehen.

In einem vierten Schritt 5 (RTM-Preform) wird ein Faservorformling 20, der auch als RTM-Preform bezeichnet wird, hergestellt. Der Faservorformling 20 ist in perspektivischer Teilansicht aus Fig. 7 ersichtlich und in einem Endbereich 21 in Richtung seines stirnseitigen Endes 22 trapezförmig aufgeweitet.

In einem nachfolgenden fünften Schritt 23 werden die Lagerbuchse 4 und der Faservorformling 20 in eine Spritzpressform eines Spritzpresswerkzeugs eingebracht, wobei der Faservorformling 20 ferner mit seinem Endbereich 21 in die Verbindungsnut 9 der Lagerbuchse 4 eingebracht wird, und zwar derart, dass der trapezförmig aufgeweitete Endbereich 21 des Faservorformlings 20 in den trapezförmig aufgeweiteten Endbereich 11 der Verbindungsnut 9 eingreift.

Danach wird in einem sechsten Schritt 6 (RTM) eine Verbindungsstrebe 8 in Form eines Rohbauteils durch Imprägnieren des Faservorformlings 20 mit einem duroplastischen Material hergestellt, welches dazu in die Spritzpressform durch Spritzpressen eingespritzt wird. Nach dem Aushärten des Verbindungsstreben-Rohbauteils ist dieses bereits formschlüssig mit der Lagerbuchse 4 verbunden.

Anschließend wird das ausgehärtete und die Lagerbuchse 4 sowie die formschlüssig mit dieser verbundene Verbindungstrebe 8 umfassende Formteil in einem siebten Schritt 7 (Nacharbeit) dem Spritzpresswerkzeug entnommen und zu einem Fertigteil 19 nachbearbeitet, beispielsweise besäumt. Das Fertigteil 19 ist in Fig. 5 lediglich schematisch angedeutet und in perspektivischer Teilansicht in Fig. 8 gezeigt.

Wie aus Fig. 8 ersichtlich, ist durch das Spritzpressen aus dem Endbereich 21 des Faservorformlings 20 ein trapezförmig aufgeweiteter und in den Endbereich 11 der Verbindungsnut 9 der Lagerbuchse 4 formschlüssig eingreifender Endbereich 14 der Verbindungsstrebe 8 gebildet worden. Bei dem Fertigteil 19 sind die Verbindungsstrebe 8 und die Lagerbuchse 4 somit durch die ineinandergreifenden trapezförmigen Aufweitungen 11 und 14 nach Art einer Schwalbenschwanzverbindung formschlüssig miteinander verbunden.

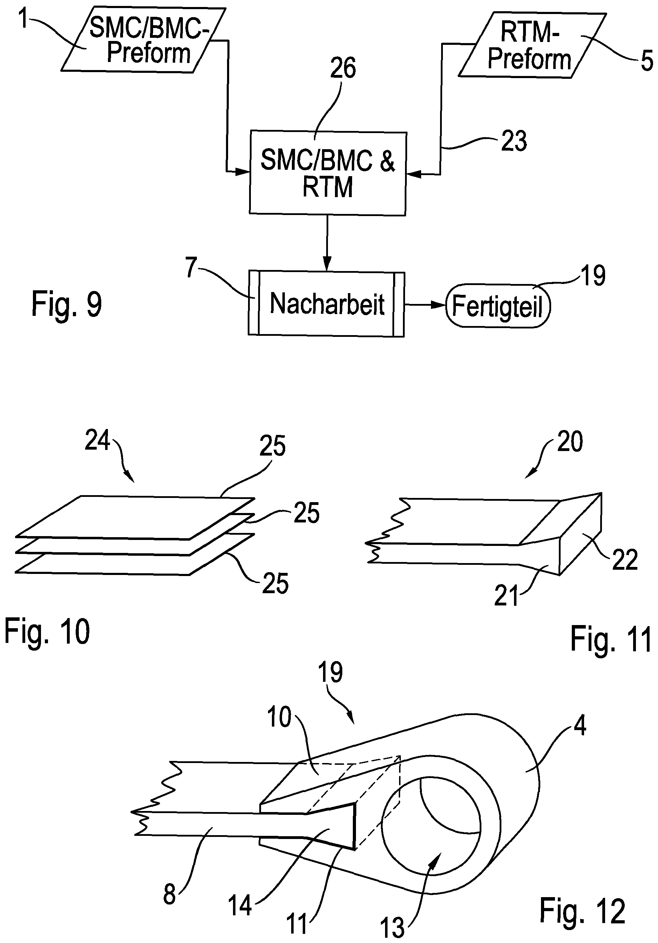

Aus Fig. 9 ist ein Flussdiagramm zur Veranschaulichung eines Verfahrens zur Herstellung eines Fahrzeugbauteils gemäß einer dritten Ausführungsform ersichtlich, wobei zu den vorherigen Ausführungsformen identische oder ähnliche Merkmale mit denselben Bezugszeichen wie bei den vorherigen Ausführungsformen bezeichnet sind.

In einem ersten Schritt 1 (SMC/BMC-Preform) wird ein Faser-Matrix-Halbzeug mit duroplastischer Matrix in eine Pressform eingebracht. Bei der duroplastischen Matrix handelt es sich um ein SMC-Halbzeug oder BMC-Halbzeug, sodass das in die Pressform eingebrachte Faser-Matrix-Halbzeug als SMC-Preform oder BMC-Preform bezeichnet wird. Anders als bei den vorhergehenden Ausführungsformen ist die Pressform aber in ein Spritzpresswerkzeug integriert. Das Faser-Matrix-Halbzeug 24 ist als SMC-Halbzeug schematisch in Fig. 10 durch mehrere Lagen von SMC-Matten 25 dargestellt.

In einem zweiten Schritt 5 (RTM-Preform) wird ein Faservorformling 20, der auch RTM-Preform bezeichnet wird, hergestellt. Der Faservorformling 20 ist in perspektivischer Teilansicht aus Fig. 11 ersichtlich und in einem Endbereich 21 in Richtung seines stirnseitigen Endes 22 trapezförmig aufgeweitet. In einem nachfolgenden dritten Schritt 23 wird der Faservorformling 20 in eine Spritzpressform des Spritzpresswerkzeugs eingebracht.

In einem nachfolgenden vierten Schritt 26 (SMC/BMC & RTM) wird eine Lagerbuchse in Form eines Rohbauteils durch Pressen des Faser-Matrix-Halbzeugs hergestellt. Die Lagerbuchse 4 wird dabei mit einem eine Verbindungsnut 9 umfassenden Anschlussbereich 10 hergestellt, die in einem Endbereich 11 in Richtung ihres Nutgrunds 12 trapezförmig aufgeweitet ist. Dabei umgreift oder umschließt der Anschlussbereich 10 den Endbereich 21 des Faservorformlings 20 derart, dass der trapezförmig aufgeweiteten Endbereich 21 des Faservorformlings 20 in dem trapezförmig aufgeweiteten Endbereich 11 der Verbindungsnut 9 angeordnet ist und/oder in diesen eingreift. Ferner wird dabei der Endbereich 21 des Faservorformlings 20 in der Regel bereits mit Material der duroplastischen Matrix benetzt. Bevor die duroplastische Matrix und/oder das Material der Lagerbuchse 4 ausgehärtet oder vollständig ausgehärtet ist, wird eine Verbindungsstrebe 8 in Form eines Rohbauteils durch Imprägnieren des Faservorformlings 20 mit einem duroplastischen Material hergestellt, welches dazu in die Spritzpressform durch Spritzpressen eingespritzt wird. Das Pressen des Faser-Matrix-Halbzeugs zu der Lagerbuchse und das Imprägnieren des Faservorformlings 20 zu der Verbindungsstrebe 8 erfolgen insbesondere gleichzeitig oder nacheinander. Bevorzugt erfolgt das Imprägnieren des Faservorformlings 20 zu der Verbindungsstrebe 8 nach dem Pressen des Faser-Matrix-Halbzeugs zu der Lagerbuchse. Nach dem Aushärten der beiden Rohbauteile sind diese bereits stoffschlüssig und formschlüssig miteinander verbunden.

Anschließend wird das ausgehärtete und die Lagerbuchse 4 sowie die formschlüssig mit dieser verbundene Verbindungstrebe 8 umfassende Formteil in einem fünften Schritt 7 (Nacharbeit) dem Spritzpresswerkzeug entnommen und zu einem Fertigteil 19 nachbearbeitet, beispielsweise besäumt. Das Fertigteil 19 ist in Fig. 9 lediglich schematisch angedeutet und in perspektivischer Teilansicht in Fig. 12 gezeigt. Wie aus Fig. 12 ersichtlich, ist durch das Spritzpressen aus dem Endbereich 21 des Faservorformlings 20 ein trapezförmig aufgeweiteter und in den trapezförmig aufgeweiteten Endbereich 11 der Verbindungsnut 9 der Lagerbuchse 4 formschlüssig eingreifender Endbereich 14 der Verbindungsstrebe 8 gebildet worden. Bei dem Fertigteil 19 sind die Verbindungsstrebe 8 und die Lagerbuchse 4 somit durch die ineinandergreifenden trapezförmigen Aufweitungen 11 und 14 nach Art einer Schwalbenschwanzverbindung formschlüssig miteinander verbunden. Ferner sind die Verbindungsstrebe 8 und die Lagerbuchse 4 stoffschlüssig miteinander verbunden, da das Imprägnieren des Faservorformlings 20 zu der Verbindungsstrebe 8 zu einem Zeitpunkt durchgeführt worden ist, zu dem die duroplastische Matrix und/oder das Material der Lagerbuchse 4 noch nicht oder noch nicht vollständig ausgehärtet war.

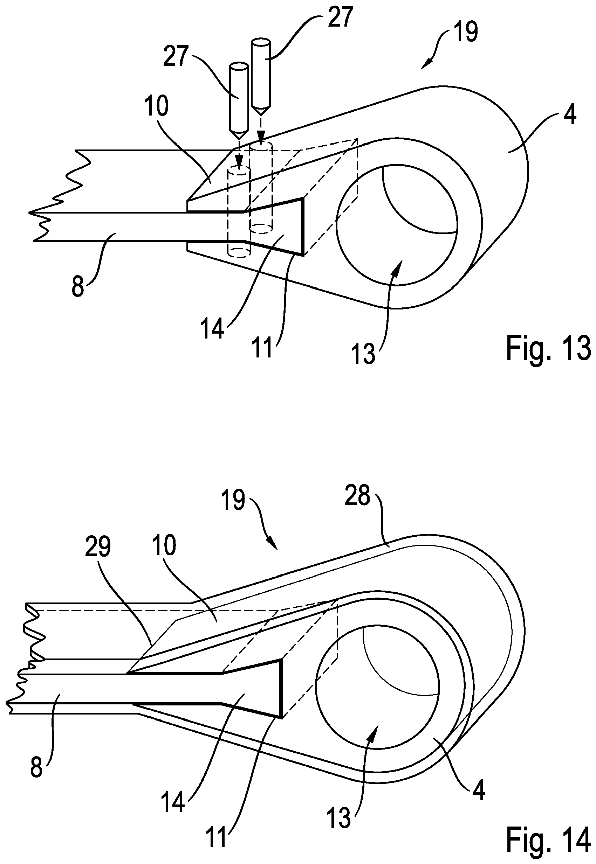

Aus Fig. 13 ist eine perspektivische Teilansicht des Fertigteils 19 gemäß einer ersten Weiterbildung ersichtlich, wobei in den Anschlussbereich 10 der Lagerbuchse 4 in den Endbereich 14 der Verbindungsstrebe 8 eingreifende Stifte 27 eingebracht sind oder werden, durch welche die Verbindungstrebe 8 zusätzlich formschlüssig mit der Lagerbuchse 4 verbunden ist oder wird. Die Stifte 27 können dabei während des Spritzpressens oder nachträglich eingebracht werden. Werden die Stifte 27 während des Spritzpressens eingebracht, dienen die Stifte 27 bevorzugt auch zum Fixieren des Faservorformlings 20 in der Spritzpressform.

Aus Fig. 14 ist eine perspektivische Teilansicht des Fertigteils 19 gemäß einer zweiten Weiterbildung ersichtlich, wobei die Lagerbuchse 4 an ihrem Außenumfang zusätzlich mit Fasern 28 umschlungen ist. Die die Lagerbuchse 4 umschlingenden Fasern 28 bilden bevorzugt einen Teil der Verbindungstrebe 8 und werden bereits bei dem Faservorformling 20 vorgesehen, sodass das Fertigteil 19 gemäß der zweiten Weiterbildung vorzugsweise auf Basis des Verfahren gemäß einer zweiten Ausführungsform hergestellt wird. Der Übergang 29 zwischen dem Anschlussbereich 10 der Lagerbuchse 4 und der Verbindungsstrebe 8 oder dem aus der Verbindungstrebe mit den Fasern 28 gebildeten Laminat kann sowohl scharfkantig als auch stumpf ausgebildet werden. Gemäß Fig. 14 ist dieser Übergang 29 scharfkantig ausgebildet, was bei der Umschlingung der Lagerbuchse 4 mir den Fasern 28 bevorzugt ist, da hierdurch ein homogenerer Übergang zwischen der Lagerbuchse 4 und der Verbindungsstrebe 8 oder dem Laminat erzielbar ist.

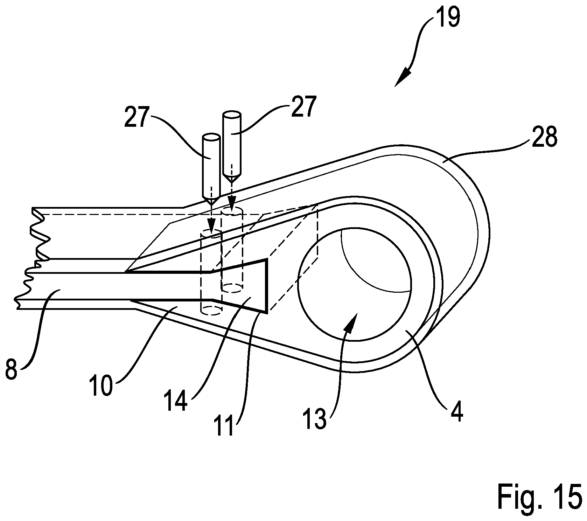

Aus Fig. 15 ist eine perspektivische Teilansicht des Fertigteils 19 gemäß einer dritten Weiterbildung ersichtlich, die einer Kombination der aus den Fig. 13 und 14 ersichtlichen Weiterbildungen entspricht.

### Bezugszeichen

- 1: Einbringen eines Faser-Matrix-Halbzeugs in eine Pressform
- 2: Herstellen der Lagerbuchse durch Pressen
- 3: Nachbearbeiten
- 4: Lagerbuchse
- 5: Herstellen eines Faservorformlings
- 6: Spritzpressen
- 7: Nachbearbeiten
- 8: Verbindungsstrebe
- 9: Verbindungsnut im Anschlussbereich
- 10: Anschlussbereich der Lagerbuchse
- 11: Endbereich der Verbindungsnut
- 12: Nutgrund der Verbindungsnut
- 13: durchgehende Öffnung in Lagerbuchse
- 14: Endbereich der Verbindungsstrebe
- 15: stirnseitiges Ende der Verbindungsstrebe
- 16: Kleben
- 17: Klebstoff
- 18: Nachbearbeiten
- 19: Fertigteil / Fahrzeugteil
- 20: Faservorformling
- 21: Endbereich des Faservorformlings
- 22: stirnseitiges Ende des Faservorformlings
- 23: Einbringen in Spritzpressform
- 24: Faser-Matrix-Halbzeug
- 25: SMC-Matte
- 26: kombiniertes Pressen und Spritzpressen
- 27: Stift
- 28: umschlingende Fasern
- 29: Übergang

## Patentansprüche

1. Verfahren zur Herstellung eines Fahrzeugbauteils in der Ausbildung eines Fahrwerkbauteils für ein Kraftfahrzeug, mit den Verfahrensschritten: Einbringen eines Faser-Matrix-Halbzeugs (24) mit duroplastischer Matrix in eine Pressform, Herstellen einer Lagerbuchse (4) durch Pressen des Faser-Matrix-Halbzeugs (24), Herstellen eines Faservorformlings (20) für eine Verbindungsstrebe (8), Einbringen des Faservorformlings (20) in eine Spritzpressform, Herstellen der Verbindungsstrebe (8) durch Imprägnieren des Faservorformlings (20) mit einem duroplastischen Material, welches dazu in die Spritzpressform eingespritzt wird, und festes Verbinden der Verbindungsstrebe (8) mit der Lagerbuchse (4), wobei die Lagerbuchse (4) mit einem Anschlussbereich (10) hergestellt wird und zum festen Verbinden der Verbindungsstrebe (8) mit der Lagerbuchse (4) ein Endbereich (14) der Verbindungstrebe (8) mit dem Anschlussbereich (10) der Lagerbuchse (4) formschlüssig verbunden wird.

2. Verfahren nach Anspruch 1, **dadurch gekennzeichnet, dass** das feste Verbinden der Verbindungsstrebe (8) mit der Lagerbuchse (4) durch Stoffschluss und Formschluss erfolgt.

3. Verfahren nach einem der vorangehenden Ansprüche, **dadurch gekennzeichnet, dass** die Lagerbuchse (4) mit einem eine Verbindungsnut (9) umfassenden Anschlussbereich (10) hergestellt wird und zum festen Verbinden der Verbindungsstrebe (8) mit der Lagerbuchse (4) der Endbereich (14) der Verbindungstrebe (8) in die Verbindungsnut (9) eingebracht wird.

4. Verfahren nach Anspruch 3, **dadurch gekennzeichnet, dass** ein Klebstoff (17) in die Verbindungsnut (9) eingebracht wird.

5. Verfahren nach Anspruch 3 oder 4, **dadurch gekennzeichnet, dass** die Verbindungsnut (9) mit einer Hinterschneidung (11) versehen wird, in welche der Endbereich (14) der Verbindungsstrebe (8) formschlüssig eingreift.

6. Verfahren nach einem der Ansprüche 3 bis 5, **dadurch gekennzeichnet, dass** in den Anschlussbereich (10) wenigstens ein in den Endbereich (14) der Verbindungsstrebe (8) eingreifender Stift (27) eingebracht wird, sodass die Verbindungsstrebe (8) und die Lagerbuchse (4) durch den Stift (27) formschlüssig miteinander verbunden werden.

7. Verfahren nach einem der vorangehenden Ansprüche, **dadurch gekennzeichnet, dass** die Lagerbuchse (4) an ihrem Außenumfang zusätzlich mit Fasern (28) umschlungen wird, die fest mit der Verbindungstrebe (8) verbunden werden.

8. Verfahren nach einem der vorangehenden Ansprüche, **dadurch gekennzeichnet, dass** sowohl die Lagerbuchse (4) als auch die Verbindungsstrebe (8) separat voneinander hergestellt und anschließend miteinander verbunden werden.

9. Verfahren nach einem der Ansprüche 1 bis 7, **dadurch gekennzeichnet, dass** die hergestellte Lagerbuchse (4) vor dem Imprägnieren des Faservorformlings (20) in die Spritzpressform eingebracht wird und durch das Imprägnieren des Faservorformlings (20) die Verbindungsstrebe (8) formschlüssig mit der Lagerbuchse (4) verbunden wird.

10. Verfahren nach Anspruch 9, **dadurch gekennzeichnet, dass** vor dem Imprägnieren des Faservorformlings (20) der Faservorformling (20) mit einem Endbereich (21) in die Verbindungsnut (9) eingebracht wird.

11. Verfahren nach einem der Ansprüche 1 bis 7, **dadurch gekennzeichnet, dass** die Pressform und die Spritzpressform miteinander kombiniert und/oder in einem gemeinsamen Werkzeug vorgesehen werden und das Imprägnieren des Faservorformlings (20) gleichzeitig mit oder nach dem Pressen des Faser-Matrix-Halbzeugs (24) aber vor dem vollständigen Aushärten der duroplastischen Matrix oder der Lagerbuchse (4) erfolgt, sodass durch das Imprägnieren des Faservorformlings (20) die Verbindungsstrebe (8) stoffschlüssig mit der Lagerbuchse (4) verbunden wird.

12. Verfahren nach Anspruch 11, **dadurch gekennzeichnet, dass** vor dem Imprägnieren des Faservorformlings (20) der Faservorformling (20) mit einem Endbereich (21) in der Verbindungsnut (9) angeordnet wird.

## Claims

1. Method for producing a vehicle component in the form of a chassis component for a motor vehicle, having the method steps of: introducing a fibre matrix semi-finished product (24) with thermosetting matrix into a pressing mould, producing a bearing bushing (4) by pressing the fibre matrix semi-finished product (24), producing a fibre preform (20) for a connecting strut (8), introducing the fibre preform (20) into a transfer mould, producing the connecting strut (8) by impregnating the fibre preform (20) with a thermosetting material, which is injected into the transfer mould for this purpose, and fixedly connecting the connecting strut (8) to the bearing bushing (4), wherein the bearing bushing (4) is produced with a connection region (10), and, for the purposes of fixedly connecting the connecting strut (8) to the bearing bushing (4), an end region (14) of the connecting strut (8) is connected to the connection region (10) of the bearing bushing (4) in a positively-locking manner.

2. Method according to Claim 1, **characterized in that** the connecting strut (8) is fixedly connected to the bearing bushing (4) by way of a material-to-material bond and a form fit.

3. Method according to either of the preceding claims, **characterized in that** the bearing bushing (4) is produced with a connection region (10) which comprises a connecting slot (9), and, for the purposes of fixedly connecting the connecting strut (8) to the bearing bushing (4), the end region (14) of the connecting strut (8) is introduced into the connecting slot (9).

4. Method according to Claim 3, **characterized in that** an adhesive (17) is introduced into the connecting slot (9).

5. Method according to Claim 3 or 4, **characterized in that** the connecting slot (9) is provided with an undercut (11), in which the end region (14) of the connecting strut (8) engages in a positively-locking manner.

6. Method according to one of Claims 3 to 5, **characterized in that** at least one pin (27), which engages in the end region (14) of the connecting strut (8), is introduced into the connection region (10), such that the connecting strut (8) and the bearing bushing (4) are connected to one another in a positively-locking manner by way of the pin (27).

7. Method according to one of the preceding claims, **characterized in that** the bearing bushing (4), at its outer circumference, is additionally looped around by fibres (28), which are fixedly connected to the connecting strut (8).

8. Method according to one of the preceding claims, **characterized in that** both the bearing bushing (4) and the connecting strut (8) are produced separately from one another and are subsequently connected to one another.

9. Method according to one of Claims 1 to 7, **characterized in that**, prior to the impregnation of the fibre preform (20), the bearing bushing (4) produced is introduced into the transfer mould, and the connecting strut (8) is connected to the bearing bushing (4) in a positively-locking manner by way of the impregnation of the fibre preform (20).

10. Method according to Claim 9, **characterized in that**, prior to the impregnation of the fibre preform (20), the fibre preform (20) is introduced with an end region (21) into the connecting slot (9).

11. Method according to one of Claims 1 to 7, **characterized in that** the pressing mould and the transfer mould are combined with one another and/or provided in a common tool, and the fibre preform (20) is impregnated at the same time as, or subsequent to, the pressing of the fibre matrix semi-finished product (24) but prior to the complete curing of the thermosetting matrix or of the bearing bushing (4), such that the connecting strut (8) is connected to the bearing bushing (4) in a materially-bonded manner by way of the impregnation of the fibre preform (20).

12. Method according to Claim 11, **characterized in that**, prior to the impregnation of the fibre preform (20), the fibre preform (20) is arranged with an end region (21) in the connecting slot (9).

## Revendications

1. Procédé de fabrication d'un composant de véhicule configuré comme composant de châssis de véhicule automobile, le procédé comportant les étapes consistant à : insérer dans un moule de pressage un semi-produit (24) à matrice thermodurcissable et fibres, réaliser une douille de montage (4) en comprimant le semi-produit (24) à matrice et fibres, réaliser une ébauche de fibres (20) pour entretoise de liaison (8), insérer l'ébauche de fibres (20) dans un moule de moulage par injection, réaliser l'entretoise de liaison (8) en imprégnant l'ébauche de fibres (20) d'un matériau thermodurcissable injecté dans ce but dans le moule de moulage par injection, et relier solidairement l'entretoise de liaison (8) à la douille de montage (4), la douille de montage (4) étant réalisée avec une zone de raccordement (10), et une partie d'extrémité (14) de l'entretoise de liaison (8) étant reliée en correspondance géométrique à la zone de raccordement (10) de la douille de montage (4) pour assurer la liaison solidaire de l'entretoise de liaison (8) avec la douille de montage (4).

2. Procédé selon la revendication 1, **caractérisé en ce que** la liaison solidaire de l'entretoise de liaison (8) avec la douille de montage (4) s'effectue par mise en correspondance de matière et mise en correspondance géométrique.

3. Procédé selon l'une des revendications précédentes, **caractérisé en ce que** la douille de montage (4) est réalisée avec une zone de raccordement (10) qui comprend une rainure de liaison (9) et **en ce que** la partie d'extrémité (14) de l'entretoise de liaison (8) est insérée dans la rainure de liaison (9) pour assurer la liaison solidaire de l'entretoise de liaison (8) avec la douille de montage (4).

4. Procédé selon la revendication 3, **caractérisé en ce qu'**un adhésif (17) est apporté dans la rainure de liaison (9).

5. Procédé selon les revendications 3 ou 4, **caractérisé en ce que** la rainure de liaison (9) est dotée d'une contre-dépouille (11) dans laquelle la partie d'extrémité (14) de l'entretoise de liaison (8) s'engage en correspondance géométrique.

6. Procédé selon l'une des revendications 3 à 5, **caractérisé en ce que** dans la zone de raccordement (10), au moins une tige (27) qui s'engage dans la partie d'extrémité (14) de l'entretoise de liaison (8) est insérée de telle sorte que l'entretoise de liaison (8) et la douille de montage (4) soient reliées l'une à l'autre en correspondance géométrique par la tige (27).

7. Procédé selon l'une des revendications précédentes, **caractérisé en ce que** la douille de montage (4) est en outre entourée à sa périphérie extérieure par des fibres (28) reliées solidairement à l'entretoise de liaison (8).

8. Procédé selon l'une des revendications précédentes, **caractérisé en ce que** tant la douille de montage (4) que l'entretoise de liaison (8) sont réalisées séparément l'une de l'autre et ensuite reliées l'une à l'autre.

9. Procédé selon l'une des revendications 1 à 7, **caractérisé en ce que** la douille de montage (4) qui a été fabriquée est insérée dans le moule de moulage par injection avant l'imprégnation de l'ébauche de fibres (20) et **en ce que** l'entretoise de liaison (8) est reliée en correspondance géométrique à la douille de montage (4) par l'imprégnation de l'ébauche de fibres (20) .

10. Procédé selon la revendication 9, **caractérisé en ce qu'**avant l'imprégnation de l'ébauche de fibres (20), l'ébauche de fibres (20) est insérée par une partie d'extrémité (21) dans la rainure de liaison (9).

11. Procédé selon l'une des revendications 1 à 7, **caractérisé en ce que** le moule de pressage et le moule de moulage par injection sont combinés l'un à l'autre et/ou sont prévus dans un outil commun et **en ce que** l'imprégnation de l'ébauche de fibres (20) a lieu en même temps que ou après le pressage du semi-produit (24) mais avant le durcissement complet de la matrice thermodurcissable ou de la douille de montage (4) de telle sorte que l'imprégnation de l'ébauche de fibres (20) entraîne une liaison en correspondance de matière de l'entretoise de liaison (8) avec la douille de montage (4).

12. Procédé selon la revendication 11, **caractérisé en ce qu'**avant l'imprégnation de l'ébauche de fibres (20), une partie d'extrémité (21) de l'ébauche de fibres (20) est placée dans la rainure de liaison (9).
